# FASCICULE DE BREVET EUROPEEN

(11) **EP 2 122 808 B1**
(45) Date de publication et mention de la délivrance du brevet: **01.03.2017**
(21) Numéro de dépôt: 07871993.7
(22) Date de dépôt: 20.12.2007
(51) Int. Cl.: H02K 11/04, H02K 9/06

(54) **AGENCEMENT DE REDRESSEMENT DE COURANT DE MACHINE ELECTRIQUE TOURNANTE**
VORRICHTUNG ZUR GLEICHRICHTUNG DES STROMS EINER ELEKTRISCHEN DREHMASCHINE
DEVICE FOR RECTIFYING THE CURRENT OF AN ELECTRIC ROTARY MACHINE

(30) Priorité: 22.12.2006 FR 0655844; 30.03.2007 FR 0754188
(43) Date de publication de la demande: 25.11.2009
(73) Titulaire: Valeo Equipements Electriques Moteur, 94046 Créteil Cedex (FR)
(72) Inventeur: GAS, Olivier, F-75017 Paris (FR); TAUVRON, Fabrice, F-91200 Athis-Mons (FR); TUNZINI, Marc, F-78000 Versailles (FR); SEIDENBINDER, Régis, F-94600 Choisy Le Roi (FR)
(74) Mandataire: Gamonal, Didier
(86) Numéro de dépôt international: PCT/FR2007/052582
(87) Numéro de publication internationale: WO 2008/087333

(56) Documents cités:
- EP-A1- 1 460 749
- DE-A1- 2 209 733
- FR-A- 2 879 368
- FR-A1- 2 729 802
- JP-A- 56 058 752
- US-A1- 2002 105 242

## Description

### Domaine de l'invention

La présente invention concerne un agencement de redressement de courant pour machine électrique tournante, tel qu'un alternateur de véhicule automobile, comportant un dispositif de redressement de courant et un palier de la machine électrique tournante doté d'ouvertures de passage d'un flux de refroidissement, tel que de l'air, et une machine électrique tournante, notamment un alternateur de véhicule automobile à ventilation interne, comportant un tel agencement.

### Etat de la technique

Un tel agencement et une telle machine sont décrits dans le document WO 03/009452 (FR 2 827 437).

Dans ce document la machine électrique tournante est un alternateur polyphasé pour véhicule automobile comportant un carter portant un stator entourant un rotor solidaire d'un arbre monté rotatif dans le carter.

Le carter comporte au moins un flasque avant et un flasque arrière portant chacun centralement un moyen de palier, tel qu'un roulement à billes, pour montage rotatif de l'arbre du rotor. De tels flasques sont appelés respectivement palier avant et palier arrière.

Le rotor est un rotor à griffes ou un rotor à pôles saillants.

Au moins un bobinage d'excitation est associé à ce rotor de préférence en matière ferromagnétique.

Le stator comporte un corps sous la forme d'un paquet de tôles portant un bobinage de stator polyphasé. Le bobinage est dans un mode de réalisation à segments conducteurs, en variante à fil continu.

Chaque phase du stator et donc de la machine comporte au moins un enroulement.

Le bobinage d'excitation est dans un mode de réalisation relié par des liaisons filaires à des bagues collectrices solidaires de l'extrémité arrière de l'arbre du rotor. Des balais sont admis à frotter sur les bagues. Ces balais sont portés par un porte balais le plus souvent solidaire d'un régulateur de tension.

Dans un autre mode réalisation le bobinage d'excitation est fixe, l'alternateur étant sans balais.

Les extrémités des phases du stator sont reliées à un dispositif de redressement de courant porté par le palier arrière. Un capot de protection coiffe le dispositif de redressement et est solidaire du palier arrière.

L'ensemble dispositif de redressement palier arrière constitue un agencement de redressement.

Le capot et le palier arrière sont ajourés pour circulation d'un fluide de refroidissement, tel que de l'air, à l'intérieur du carter de la machine.

Le palier arrière a une forme creuse et comporte un fond, globalement d'orientation transversale par rapport à l'axe de l'alternateur confondu avec l'axe de l'arbre du rotor. Le fond du palier arrière comporte des ouvertures de passage de l'air.

Cette circulation de l'air est réalisée à l'aide d'au moins un ventilateur. Ce ventilateur est dans un mode de réalisation un ventilateur solidaire du rotor.

En variante le ventilateur est un ventilateur externe adjacent au palier avant également ajouré.

Ainsi qu'on le sait lorsque le bobinage d'excitation du rotor est alimenté électriquement et que l'arbre du rotor tourne, le rotor est magnétisé et un courant alternatif induit est engendré dans le bobinage du stator.

Ce courant induit est redressé en un courant continu par le dispositif de redressement de courant pour notamment recharger la batterie du véhicule et alimenter les consommateurs du réseau de bord du véhicule en courant continu.

La circulation de l'air engendré par la rotation du ou des ventilateurs permet de refroidir le dispositif de redressement ainsi que le bobinage du stator.

Dans le document WO 03/009452 l'agencement de redressement de courant est doté d'un dispositif de redressement de courant comportant des diodes qui sont dotées d'une embase, appelée culot, comportant une partie principale massive prolongée axialement par un socle présentant à son extrémité libre une face de fixation pour un élément semi conducteur intercalé entre le socle et la tête d'un élément de connexion en forme de fil rigide appelé queue de diode ou axe de la diode. De la résine enrobe la tête de la queue de la diode et l'élément semi conducteur. Cette résine est solidaire du culot de la diode.

Le dispositif de redressement de courant, porté par le palier arrière, comporte :
- une pluralité de diodes positives supportées par un support positif portant des ailettes de refroidissement ;
- une pluralité de diodes négatives supportées par le fond du palier arrière ;
- un connecteur pour relier les queues des diodes au sorties des phases du stator.

Les diodes constituent des éléments de redressement de courant.

Dans un autre mode de réalisation sont remplacées par des transistors du type MOSFET.

Le support positif et le palier arrière sont métalliques, tandis que le connecteur comporte un corps en matière plastique dans lequel sont noyées des traces électriquement conductrices dénudées par endroit pour réaliser notamment les liaisons électriques avec les queues des diodes positives et négatives. Comme visible notamment à la figure 5 de ce document WO 03/009452 les diodes s'étendent parallèlement à l'axe de l'alternateur et le connecteur est implanté radialement au dessus du support positif porté à isolation électrique par le palier arrière.

Cet agencement donne satisfaction.

Dans un autre mode de réalisation décrit dans le document FR 2 729 802 les diodes ne comportent pas de queues.

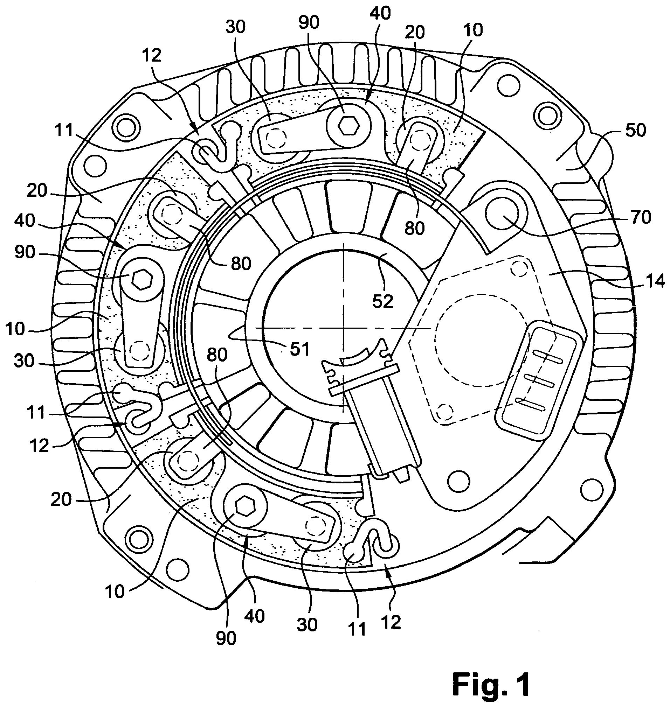

Comme visible à la figure 1 qui est une vue de face d'un agencement de redressement pour un alternateur de véhicule automobile sans le capot de l'alternateur, on a proposé dans ce document de monter les diodes positives 20 et les diodes négatives 30 sur des plaquettes de refroidissement 10.

Dans cette figure 1 ont voit en 50 le palier arrière de l'alternateur, en 40 des pièces électriquement isolantes pour isoler les plaquettes 10 du palier 50, en 70 la borne, dite borne B+, de l'alternateur, qui correspond à la sortie redressée de l'alternateur destinée à être reliée via un câble à la borne positive de la batterie, en 80 des languettes, en 90 les vis de fixation des plaquettes 10 sur le fond du palier 50, en 14 l'ensemble régulateur porte-balais, en 51 les ouvertures de passage de l'air et en 52 l'âme cylindrique délimitant intérieurement les ouvertures 51.

Chaque plaquette 10 est connectée via une liaison 11 à l'une des sorties de phase du bobinage du stator et est en contact avec l'anode de la diode positive 20, qu'elle porte, ainsi qu'avec la cathode de sa diode négative 30.

La liaison 11 traverse la plaquette 10 à la faveur d'un orifice 12 de celle-ci. Pour plus de précisions on se reportera à ce document FR 2 729 802.

Cette disposition permet de laisser libre les ouvertures de passage d'air et de créer des modules sous la forme de plaquettes portant les diodes positives et négatives.

Dans les deux modes de réalisations précitées les diodes sont d'orientation axiale par rapport à l'axe de symétrie axial du palier de l'alternateur.

Néanmoins un problème se pose dans ces modes de réalisation précités car l'alternateur est implanté sous le capot moteur au voisinage du moteur thermique du véhicule automobile.

En effet compte tenu de l'évolution des moteurs thermiques des véhicules de plus en plus confinés, la température ambiante sous le capot moteur augmente de plus en plus.

Dans certains cas cette température ambiante peut atteindre 140°C.

Il est donc souhaitable de pouvoir adapter ces dispositifs de redressement de courant précités à ces températures plus élevées.

Il est également souhaitable d'augmenter la puissance de la machine électrique tournante.

Le même problème se pose lorsque le moteur thermique est fixe et est confiné à l'intérieur d'un compartiment.

EP1460749 décrit une machine électrique rotative à courant alternatif multiphase comprenant des dissipateurs thermiques.

La présente invention a pour objet de répondre à ces souhaits.

Un but de la présente invention est donc de créer un agencement de redressement de courant travaillant à des températures ambiantes plus élevées.

Un autre but de l'invention est d'augmenter la puissance de la machine.

Suivant l'invention un agencement de redressement de courant pour machine électrique tournante polyphasée est proposé selon la revendication 1.

Grâce à l'invention les éléments de redressement de courant sont bien refroidis puisque le dissipateur prolonge transversalement vers l'intérieur le support et est implanté dans le flux du fluide de refroidissement, tel que de l'air.

Les éléments de redressement de courant ont en outre un axe de symétrie qui s'étend transversalement en sorte que cela permet de réduire l'encombrement axial de la machine.

Grâce à l'invention on peut standardiser le palier de la machine.

Le dissipateur est dans un mode de réalisation doté d'ailettes fines.

Ces ailettes s'étendent dans un mode de réalisation globalement perpendiculairement aux éléments semi-conducteurs des éléments de redressement de courant.

Le fond des éléments de redressement de courant, tel que le fond des culots des diodes, peut ainsi transmettre de la chaleur au dissipateur.

Dans un mode de réalisation se fond est en contact direct avec le dissipateur. Dans un autre mode de réalisation le fond des éléments de redressement de courant, tel que le fond des culots des diodes, peut servir à l'assemblage du dissipateur par exemple par collage ou brasage.

Selon encore d'autres caractéristiques :
le dissipateur à ailettes comporte dans un mode de réalisation une embase ;
dans un mode de réalisation l'embase porte les éléments de redressement de courant ;
dans un autre mode de réalisation l'embase est distincte d'une partie portant les éléments de redressement de courant ;
l'embase peut être solidarisée à cette partie portant les éléments de redressement de courant par brasage ou soudage ou collage ;
en variante l'embase est fixée sur cette partie à l'aide d'au moins un organe de fixation, tel qu'une vis, ou par sertissage, ou par encliquetage ;
un élément conducteur de chaleur est dans un mode de réalisation intercalé entre l'embase et la partie portant les éléments de redressement de courant, tels que des diodes ou des transistors du type MOSFET ;
dans un mode de réalisation cette partie consiste en une plaque ;
dans un mode de réalisation cette plaque comporte des protubérances de réception des culots des éléments de redressement de courant d'une phase de la machine.

Bien entendu toutes les caractéristiques précitées sont à considérer isolément et /ou en combinaison

Dans tous les cas on peut augmenter la puissance de la machine puisque les éléments de redressement de courant sont mieux refroidis.

La machine peut travailler dans un environnement à température plus élevée.

D'autres caractéristiques et avantages de l'invention apparaîtront à la lecture de la description détaillée qui suit pour la compréhension de laquelle on se reportera aux dessins annexés.

### Brève description des dessins

- la figure 1 est une vue de face d'un agencement de redressement de courant pour un alternateur de véhicule automobile de l'art antérieur ;
- la figure 2 est une vue de face, analogue à la figure 1, d'un agencement de redressement de courant pour un alternateur de véhicule automobile conforme à l'invention ;
- la figure 3 est une vue partielle en coupe selon la ligne 2-2 de la figure 2 ;
- la figure 4 est une vue analogue à la figure3 sans le rotor et sans le roulement de la machine électrique tournante ;
- la figure 5 est une vue du module du dispositif de redressement de courant de la figure 4 ;
- la figure 6 est une vue en perspective du module de la figure 5 ;
- la figure 7 est une vue partielle analogue à la figure 4 montrant une partie des moyens de connexion du module
- respectivement à la masse et à la phase ;
- la figure 8 est une schématique d'une partie du circuit électrique du dispositif de redressement de courant;
- la figure 9 est une vue partielle analogue à la figure 3 pour un autre mode de réalisation ;
- la figure 10 est une vue partielle de dessus d'un module monté sur son palier montrant une variante de fixation du dissipateur sur son module ;
- la figure 11 est une vue partielle en perspective de la variante de fixation de la figure 10, montrant une variante de liaison électrique d'une diode négative avec le palier ;
- la figure 12 est une vue analogue à la figure 11 pour encore un autre exemple de réalisation.

### Description d'exemples de réalisation

Dans les figures les éléments communs ou similaires seront affectés des mêmes signes de référence.

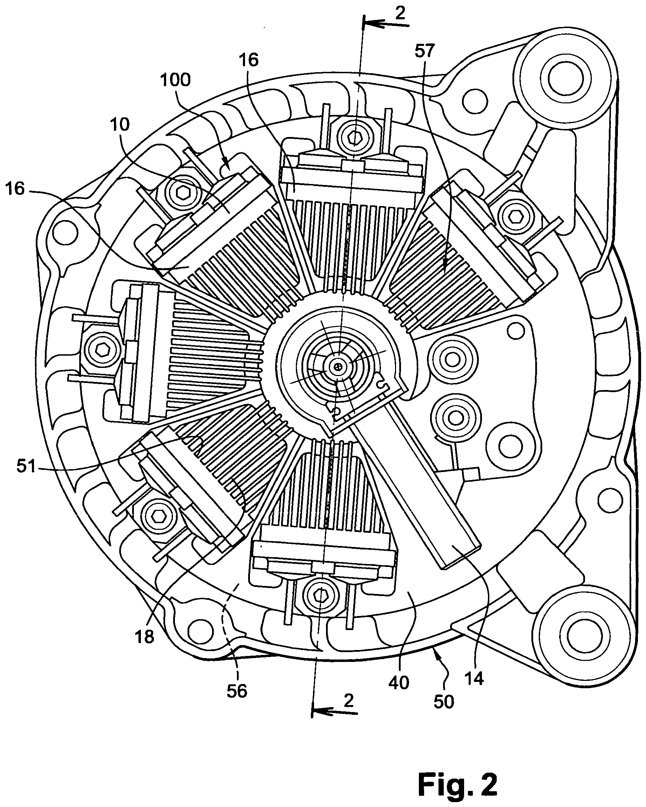

Dans les figures 2 à 4 la machine électrique tournante représentée est un alternateur polyphasé pour véhicule automobile à ventilation interne par exemple du type de celui décrit dans les documents EP 0515 259 et WO 03/009452 précité, dans lesquels on a remplacé le dispositif de redressement de courant par celui de l'invention moins encombrant axialement et mieux refroidit.

L'alternateur représenté à la figure 2 comporte 6 phases et 6 modules de redressement de courant alternatifs en courant continu selon l'invention à raison de un module par phase.

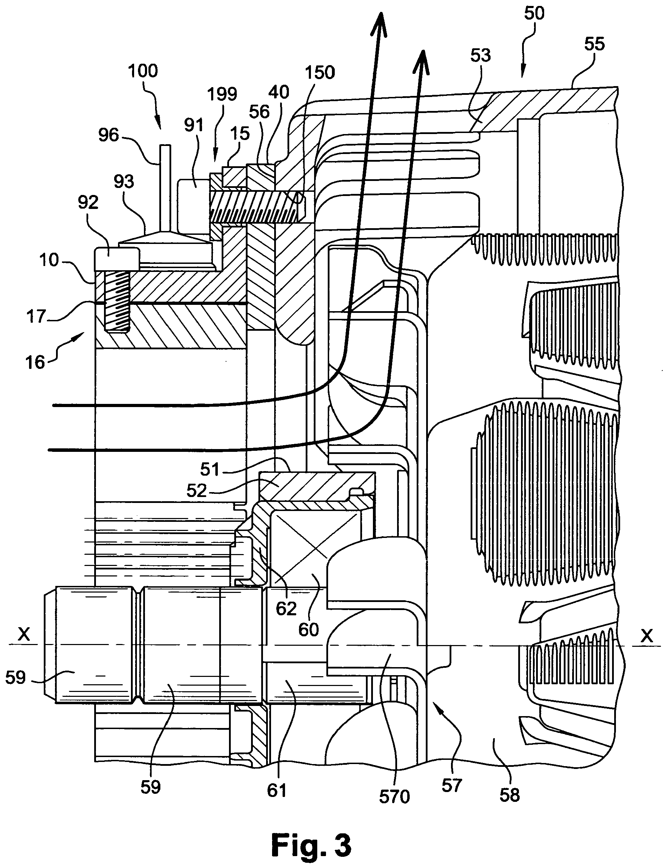

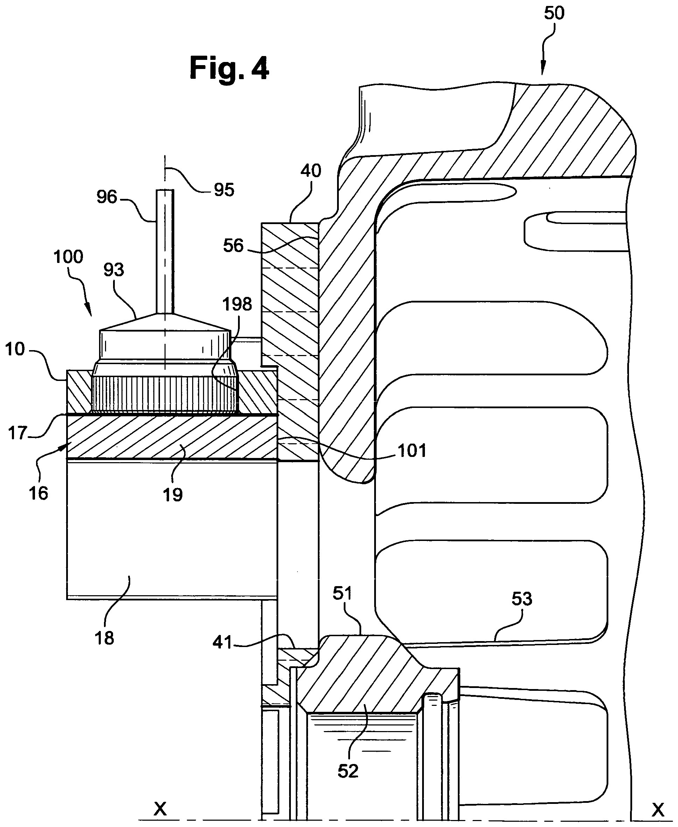

Ces modules 100 sont portés, ici à isolation électrique de manière décrite ci-après, par le fond 56 (figure 3 et 4) du palier arrière 50 de l'alternateur.

Ce palier 50 est ici métallique, de préférence en matière moulable telle que de l'aluminium. Le palier 50 est relié électriquement à la masse.

Les modules de redressement de courant appartiennent au dispositif de redressement de courant et donc à l'agencement de redressement de courant selon l'invention.

Cet agencement comporte le dispositif de redressement de courant solidaire d'un flasque de l'alternateur, ici constitué par le palier arrière de l'alternateur

L'ensemble dispositif de redressement-palier arrière constitue donc l'agencement de redressement de courant. Cet agencement forme un ensemble unitaire manipulable et transportable.

Le nombre de modules 100 est fonction du nombre de phases.

Ainsi pour un alternateur pour un alternateur triphasé le nombre de module est de trois, pour un alternateur pentaphasé le nombre de modules est de 5.

On peut monter dans l'exemple représenté 1 à 6 modules 100 avec la présence de l'ensemble porte-balais -régulateur de tension 14.

Ainsi le dispositif de redressement de courant selon l'invention comporte au moins un module, l'alternateur pouvant être du type monophasé dans un mode de réalisation.

Suivant une caractéristique chaque module 100 comporte un support 10, 16 des éléments de redressement de courant 93, 94.10 associé à une phase de l'alternateur.

Chaque support 10, 16 est destiné à être reliée électriquement à la sortie de la phase concernée.

Le support 10, 16 est électriquement et thermiquement conducteur.

Le support comporte une partie portant les éléments de redressement de courant 93, 94.

Dans le mode de réalisation des figures 2 à 7, le support 10, 16 comporte une plaque 10 constituant la partie portant les éléments de redressement de courant.

La plaque 10 est ici métallique et porte les éléments de redressement de courant 94, 93 de la phase concernée.

Ces éléments 93, 94 consistent dans ce mode de réalisation en des diodes positive et négative comme à la figure 1.

La diode positive 93 est destinée à être reliée électriquement à la borne B+, tandis que la diode négative 94 est destinée à être reliée à la masse ici (figure 3 et 4) via le fond 56 du palier arrière 50.

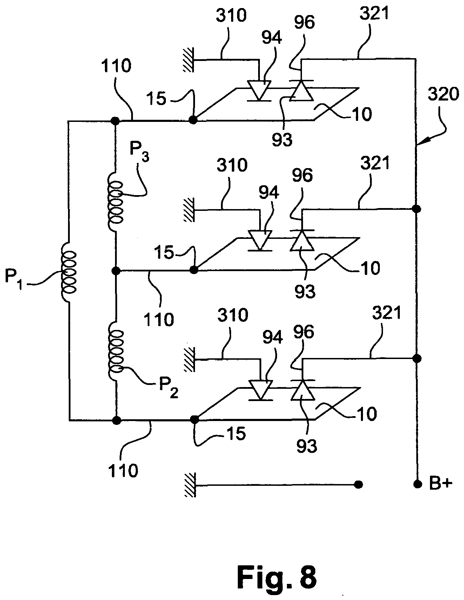

L'anode de la diode positive 93 est en contact électrique avec la plaque 10 et il en est de même de la cathode de la diode négative 94 comme mieux visible à la figure 8. Dans cette figure on a représenté que trois phases P1, P2, P3, montées en triangle, du stator de la machine électrique tournante.

La machine comporte ici trois autre phases montées en triangle où en étoile comme décrit dans le document US 4 163 187. Bien entendu on peut doubler le nombre d'encoches du corps du stator. Bien entendu la machine peut comporter que trois phases et trois modules de manière précitée.

Une pièce électriquement isolante 40 est insérée entre la plaque 10 et le palier 50 (figure 3 et 4).

Suivant une caractéristique de ce mode de réalisation le support 10, 16 d'un module 100 comporte un dissipateur de chaleur 16 qui s'étend vers le centre de la machine, c'est-à-dire globalement transversalement.

Dans ce mode de réalisation la plaque 10 est prolongée vers l'intérieur par le dissipateur de chaleur 16, qui est solidaire de la plaque 10.

Ce dissipateur de chaleur 16 est ici métallique en étant par exemple à base aluminium ou de cuivre.

Ce dissipateur 16 est solidaire de la plaque 10 et recouvre au moins partiellement une ouverture de passage d'air 51 en sorte que le module 100 est bien refroidit.

Dans un mode de réalisation le dissipateur 16 peut s'étendre à cheval sur deux ouvertures 51 et recouvrir partiellement celles-ci.

Ici le dissipateur recouvre entièrement une ouverture 51 en sorte qu'il est encore mieux refroidit.

Ces ouvertures 51 ont dans le mode de réalisation de la figure 2 une forme identique.

Suivant une caractéristique les éléments de redressement de courant 93, 94, ici des diodes, et le dissipateur 16 s'étendent de part et d'autre de la plaque 10.

Suivant une caractéristique le dissipateur 16 est disposé dans le flux du fluide de refroidissement, ici de l'air.

Ce flux est engendré par la rotation d'un ventilateur 57.

Ce ventilateur 57 est mieux visible à la figure 3. Dans cette figure on a représenté par des flèches la circulation de l'air de refroidissement engendré par la rotation du ventilateur 57 doté de pales 570.

On voit dans cette figure en 58 une partie du rotor de l'aiternateur. Ce rotor 58 est ici un rotor à griffes en variante un rotor à pôles saillants.

Le ventilateur 57 est solidaire de l'extrémité arrière du rotor 58. Ce ventilateur 57 est ici un ventilateur de forte puissance. Ce ventilateur 57 comporte un grand nombre de pales 570 et est ici du type de celui décrit dans le document WO 2004/106748. Il comporte donc deux ventilateurs élémentaires superposés, chaque ventilateur comportant un flasque doté d'une pluralité de pales 570 réparties de préférence de manière irrégulière pour réduire les bruits. Ce ventilateur 57 est rapporté par exemple par soudage sur l'extrémité arrière du rotor 58 ici à l'aide de plots de soudage appartenant par exemple au flasque du ventilateur élémentaire interne. Le ventilateur élémentaire externe est rapporté sur le ventilateur interne par exemple à l'aide de points de soudage ou de collage. Ces ventilateurs élémentaires sont ici métalliques.

Le ventilateur 57 est ici du type centrifuge.

Les pales 570 défilent devant les ouvertures 51 pour aspirer de l'air frais et refoulé l'air à la faveur d'ouvertures de sorties d'air 53 décrites ci-après.

Dans cette figure 3 on voit 61 l'arbre solidaire du rotor 58 et en 59 les bagues collectrices portées par l'extrémité arrière de l'arbre 61. C'est sur ces bagues que frottent, de manière conventionnelle, les balais portés par le porte-balais relié au régulateur de tension de l'ensemble 14.

L'axe X-X constitue l'axe de symétrie axial de l'arbre 61 et celui de la machine. Le dissipateur 16 s'étend transversalement par rapport à cet axe.

On voit que le palier arrière 50 est de forme creuse et comporte un fond 56 globalement d'orientation transversale par rapport à l'axe X-X. Ce fond est prolongé à sa périphérie externe par un rebord 55 globalement d'orientation axiale par rapport à l'axe X-X

Les ouvertures 51 sont ici des ouvertures d'entrée d'air. Ces ouvertures ont ici une forme globalement trapézoïdale et sont délimitées radialement vers l'intérieur par l'âme 52 cylindrique d'axe confondu avec l'axe X-X.

Le fond 56 du palier 50 comporte une partie continue à l'extérieur des ouvertures 51 pour ici montage des plaques 10 des modules 100.

La périphérie interne de l'âme 52 délimite l'ouverture centrale du palier 50.

Cette ouverture sert au passage de l'extrémité arrière de l'arbre 61.

La périphérie interne de l'âme 52 sert également au montage du roulement à billes 60 interposé radialement entre la périphérie externe de l'arbre 61 et la périphérie interne de l'âme 52 pour montage rotatif de l'arbre 61. Une capsule 62 est interposée radialement entre la périphérie interne de l'âme 52 et la périphérie externe du roulement 60 pour absorber les différences de dilatation. Le rebord 55 est doté d'une pluralité d'ouvertures 53 de sortie d'air axialement de forme oblongue.

Le nombre d'ouvertures, ici des ouvertures de sortie d'air 53 est de ce mode de réalisation supérieur au nombre d'ouvertures 51 d'entrée d'air.

Chaque série d'ouverture 51, 53 comporte un pluralité d'ouverture séparées les unes des autres par des bras respectivement d'orientation radiale pour les ouvertures 51 et d'orientation axiale pour les ouvertures 53, qui en variantes peuvent être inclinées axialement, sachant que les ouvertures 53 affectent ici la périphérie externe du fond 56.

Pour plus de clarté on n'a pas représenté ici le stator et son bobinage pour mieux voir le trajet de l'air.

En variante le rebord 55 est dépourvu d'ouvertures 53 et ,de manière connue, un ventilateur est implanté à l'avant de l'alternateur, le trajet de l'air étant dans ce cas axial.

Dans les figures 2 et 3 on n'a pas également représenté le capot de protection recouvrant l'ensemble 14 et le dispositif de redressement de courant à modules 100.

Chaque plaque 10 électriquement conductrice est d'orientation axiale par rapport à l'axe X-X comme mieux visible dans les figures 3 et 4.

La plaque est en contact indirect avec le fond 56 via sa tranche, avec interposition de l'élément électriquement isolant 40, sachant que le palier 50 est électriquement conducteur et est relié à la masse.

Suivant une caractéristique la tranche inférieure 101 (figure 4) de la plaque 10 s'étend ainsi globalement perpendiculairement au fond 56.

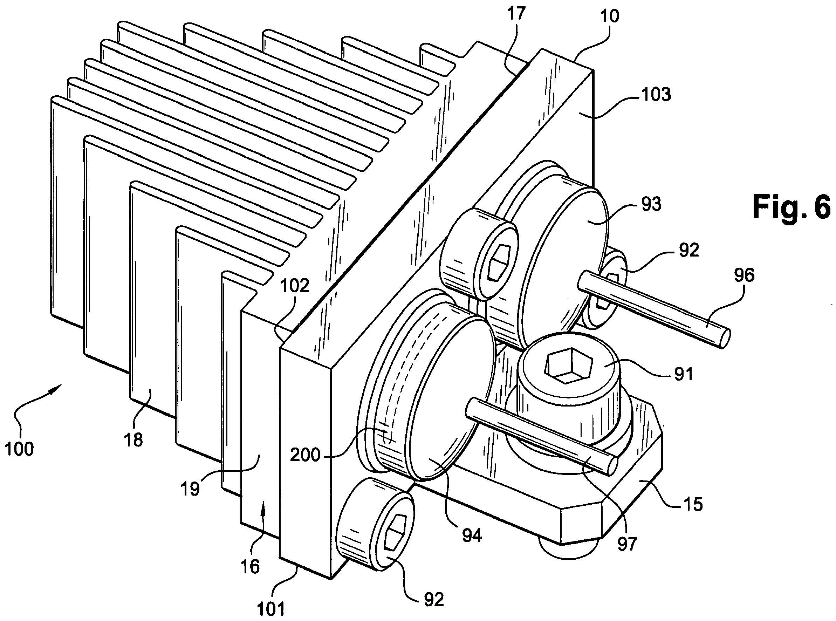

Cette plaque 10 s'étend donc globalement perpendiculairement par rapport au fond 56 du palier 50 en sorte que comme visible à la figure 6 sa face supérieure 103 porte les éléments de redressement de courant 93, 94 et sa face inférieure 102 le dissipateur 16 disposé dans le flux d'air engendré par la rotation du ventilateur 57.

Le support 10, 16 comporte donc une partie 10, qui s'étend perpendiculairement par rapport au fond 56 du palier 50.

Le dissipateur de chaleur 16 comporte une pluralité d'ailettes 18 comme mieux visible à la figure 2. Les ailettes 18 sont solidaires d'une embase 19 que présente le dissipateur 16 de manière adjacente à la face inférieure 102 de la plaque 10.

Ces ailettes 18 sont fines. Ici les ailettes 18 sont ici venues de moulage avec l' embase 19 que présente le dissipateur 16 de manière adjacente à la face inférieure 102 de la plaque 10.

Ce dissipateur 16 a une forme globalement trapézoïdale dont la grande base, constituée par l'embase 19 est adjacente à la plaque 10.

La forme globalement trapézoïdale du dissipateur est obtenue dans un mode de réalisation par l'intermédiaire des ailettes 18, qui ont une longueur différentes, comme mieux visible à la figure 6.

Le dissipateur 16 est dans un mode de réalisation monobloc avec la plaque 10.

Le support 10, 16 des éléments de redressement de courant 93,94 est dans ce cas monobloc. L'embase 19 est confondue avec la plaque 10 et porte les éléments de redressement de courant. Cette embase est perpendiculaire au fond 56 du palier 50.

Ce dissipateur est par exemple venu de moulage avec la plaque 10. La plaque 10 et le dissipateur sont par exemple en aluminium.

Dans un autre mode de réalisation l'embase 19 est distincte de la plaque 10. L'embase 19 est rapportée sur la plaque 10.

Ainsi en variante le dissipateur 16 est rapporté à la faveur de son embase 19 sur la plaque 10.

Le dissipateur 16 est dans un mode de réalisation solidarisé à la plaque 10 par l'intermédiaire d'au moins un organe de fixation 92, tel qu'une vis, un boulon ou un goujon.

Dans le mode de réalisation représenté cela est réalisé à l'aide de trois vis 92 implantées en triangle et vissées dans l'embase 19.

En variante l'embase 19 du dissipateur est soudée, brasée ou collée sur la face inférieure de la plaque 10. La colle est thermoconductrice.

Dans une autre variante le dissipateur est rapporté par encliquetage sur la plaque. Par exemple l'embase 19 comporte de pattes à crochets, qui traversent chacun une ouverture de la plaque pour venir en prise avec la face supérieure de la plaque.

Dans encore une autre variante l'embase 19 du dissipateur est rapportée par sertissage sur la plaque.

Dans le mode de réalisation représenté un élément conducteur de chaleur 17 est intercalé entre la plaque 10 et le dissipateur 16. Ici l'élément 17 est intercalé entre la face inférieure 102 de la plaque et la face supérieure de l'embase 19 et est serré à l'aide des organes de fixation 92.

L'élément 17 peut consister en de la colle thermoconductrice.

En variante l'élément 17 consiste en une feuille de matière plastique thermiquement conductrice appelée pad thermique.

D'une manière générale la fonction électrique du module 100 est réalisée à l'aide de la plaque 10, constituée en variante par l'embase 19, et des éléments de redressement de courant 93, 94 et la fonction de dissipation de chaleur par le dissipateur 16 disposé dans le flux d'air.

Dans les exemples de réalisation décrits le dissipateur n'est pas isolé électriquement par rapport à la plaque 10 porteuse des éléments de redressement de courant 93, 94 et une bonne conduction thermique est réalisée entre les éléments de redressement de courant 93, 94, portés par la plaque 10 également conductrice de chaleur, et le dissipateur 16.

Bien entendu on peut isoler électriquement le dissipateur par rapport à la plaque équipée des éléments 93, 94 tout en ayant une bonne conduction thermique.

Ainsi l'élément 17 est dans un mode de réalisation également électriquement isolant.

Cet élément consiste dans un mode de réalisation en de la colle électriquement isolante et thermiquement conductrice.

En variante l'élément 17 est un pad thermique, qui est électriquement isolant.

Ce pad est par exemple revêtu sur chacune de ses faces d'une couche de colle électriquement isolante et thermiquement conductrice pour sa fixation sur la plaque 10 et l'embase 19.

Dans un mode de réalisation ce pad est serré entre l'embase 19 et la face inférieure 102 de la plaque ce serrage étant réalisé par l'intermédiaire d'au moins un organe de fixation 92, tel qu'une vis, un boulon ou un goujon assurant la fixation de la plaque avec l'embase.

Dans ce cas il faut prévoir des canons électriquement isolants du type de ceux visible en 199 à la figure 3.

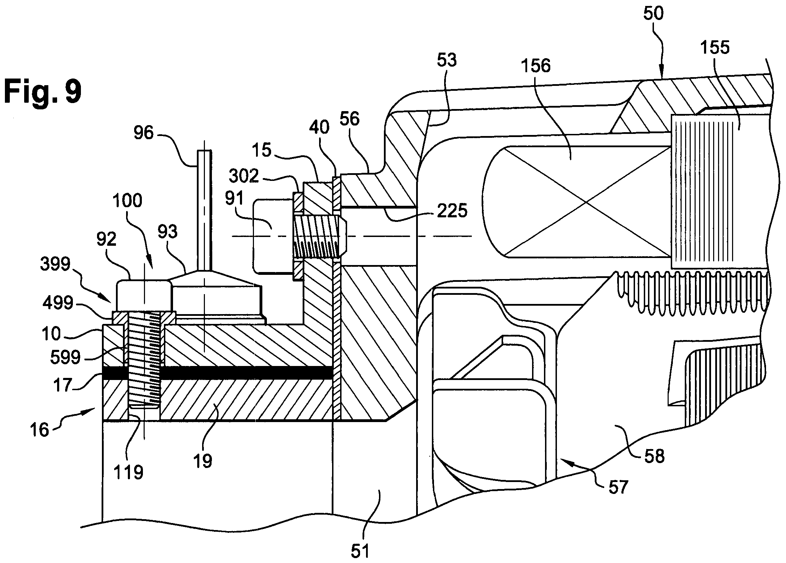

Plus précisément, comme visible à la figure 9, ce canon 399 comporte une tête 499 en forme de rondelle pour appui de la tête de l'organe de fixation 92, tel qu'une vis ou un boulon, prolongée par manchon 599 pénétrant dans un trou de passage de la plaque (non référencé) pour isoler électriquement la tige de l'organe de fixation par rapport à la plaque. L'embase comporte alors un trou 119 qui est taraudé lorsque l'organe de fixation 92 est une vis ou lisse lorsque l'organe de fixation est un boulon. Trois vis 92 peuvent être prévues et être implantées comme visible à la figure 6. Dans la figure 9 on a représenté de manière partielle le corps 155 du stator portant le bobinage de stator 156 faisant saillie par rapport au corps 155 pour former un chignon 156 à chaque extrémité axiale du corps 155.

Bien entendu on peut inverser les structures la tête de l'organe de fixation étant située du côté de la face inférieure de l'embase, le trou taraudé ou de passage de la tige de l'organe 92 étant réalisé dans la plaque. Cette inversion de structure est applicable dans tous les cas avec ou sans présence de l'élément 17.

En variante on peut serrer et fixer ce pad 17 à l'aide d'agrafes élastique électriquement isolantes prenant appui sur la face supérieure de la plaque 10 et sur la face inférieure de l'embase 19.

Ce mode de fixation est applicable dans tous les cas avec ou sans présence de l'élément 17.

La plaque 10, et donc le support 10, 16, comporte au moins une protubérance 15 pour sa fixation sur la machine électrique tournante, ici sur le fond 56 du palier 50.

La protubérance s'étend ici en direction opposée au dissipateur 16.

Cette protubérance 15 s'étend ici perpendiculairement à la plaque 10.

La protubérance 15 consiste en une patte trouée pour le passage d'un organe de fixation 91, ici sous la forme d'une vis. La patte 15 s'étend centralement à partir de la partie basse de la plaque ici globalement de forme rectangulaire.

L'embase 19 à également une forme globalement rectangulaire.

La patte 15 s'étend parallèlement au fond 56 du palier 50.

La plaque 10 équipée de sa patte 15 est obtenue par exemple par découpe et pliage.

Une pièce électriquement isolante 40 est intercalée entre le module 100 et le fond 56 du palier 50.

Cette pièce 40 est dotée d'une ouverture 41 de forme identique à celle de l'ouverture 51 associée au module 100. Cette pièce présente une variation d'épaisseur formant une empreinte 42 correspondante à la forme du module 100 pour logement du module et calage de celui-ci.

La pièce 40 comporte donc une empreinte de réception de la patte 15. L'embase 19 et la plaque 10 sont en contact avec la pièce 40 par leur tranche.

Cette pièce 40 peut être individuelle en étant associée à chaque module. Ici la pièce 40 est commune à tous les modules 100 comme visible à la figure 2. Elle est donc intercalée également entre l'ensemble 14 et le fond 56 et présente des ouvertures correspondantes à celles du fond 56.

On notera que les organes de fixation 91, tel que des vis, sont isolés électriquement par rapport à la plaque 10. Ainsi on voit en 199 à la figure 3 un canon électriquement isolant permettant d'isoler la vis 91 de la plaque 10. Ce canon présente une tête annulaire pour appui de la tête de la vis 91 vissée dans trou taraudé 150 du fond 56 et un manchon pénétrant dans le trou de passage de la tige de la vis 91 réalisé dans la patte 15 afin d'isoler la tige de la vis de la patte. La tige de la vis traverse la pièce 40 dotée d'une ouverture à cet effet.

Dans un mode de réalisation la ou les pièces 40 sont également thermiquement isolantes lorsque le palier 50 est plus chaud en fonctionnement que le module 100. En variante la ou les pièces 40 sont thermiquement conductrice lorsque le palier est plus froid en fonctionnement que le module 100.

Tout dépend de la température atteinte en fonctionnement par le stator, qui en variante peut être porté par une partie intermédiaire du carter de la machine intercalée entre les paliers avant et arrière, ladite partie intermédiaire étant refroidie par circulation du liquide de refroidissement.

A la lumière de la figure 6 on appréciera la compacité de la solution, les diodes 93, 94 étant implantées chacune entre deux organes de fixation 92, tandis que la patte 15 est suffisamment longue pour éviter toute interférence entre les diodes 93, 94 et l'organe de fixation 91 s'étendant dans un plan perpendiculaire aux diodes 93, 94.

On notera que chaque diode 93, 94 présente une queue 96, 97, qui s'étend en direction opposée au dissipateur 16.

Ces queues 96, 97 sont ici de longueur identique et s'étendent parallèlement aux ailettes fines 18 comme mieux visible à la figure 6.

Ces ailettes 18 s'étendent perpendiculairement à l'embase 19 et ont des longueurs décroissantes aux extrémités de l'embase 19 pour donner au dissipateur une forme globalement trapézoïdale.

Ces diodes présentent un culot 98 doté d'un fond 99. Le dissipateur 16 présente des ailettes 18 s'étendant perpendiculairement à la plaque 10 et aux fonds 99 du culot 98 des diodes 93, 94.

Une meilleure évacuation de la chaleur est ainsi réalisée car les fonds 99 participent à l'évacuation de la chaleur en étant en contact avec l'élément 17 thermiquement conducteur ou en variante directement avec le dissipateur 16. Cette chaleur est évacuée par le dissipateur disposé dans le flux d'air.

Ainsi on a une meilleure évacuation de la chaleur en disposant d'un côté de la plaque le dissipateur 16 et de l'autre côté les éléments redresseur de courant.

En outre la solution est plus compacte axialement que celle du document WO 03/009452 puisque les queues 96, 97 des diodes 93, 94 sont orientées transversalement vers l'extérieur et non axialement.

L'axe de symétrie 95 des queues 96, 97 et des diodes 93, 94 s'étend également perpendiculairement par rapport à la plaque 10 et à l'embase 19. Les axes 95 sont d'orientation transversale par rapport à l'axe X-X.

Le culot 98 des diodes est ici moleté pour un emmanchement à force dans l'ouverture associée 198 de la plaque 10, ce type de diode étant appelé « diode pressfit ».

En variante les diodes peuvent être brasées ou collées sur la plaque.

Bien entendu l'ouverture 198 en variante est un trou borgne en sorte que les fonds 99 des diodes sont en contact avec la plaque 10 et également avec le dissipateur lorsque celui-ci est d'un seul tenant avec la plaque.

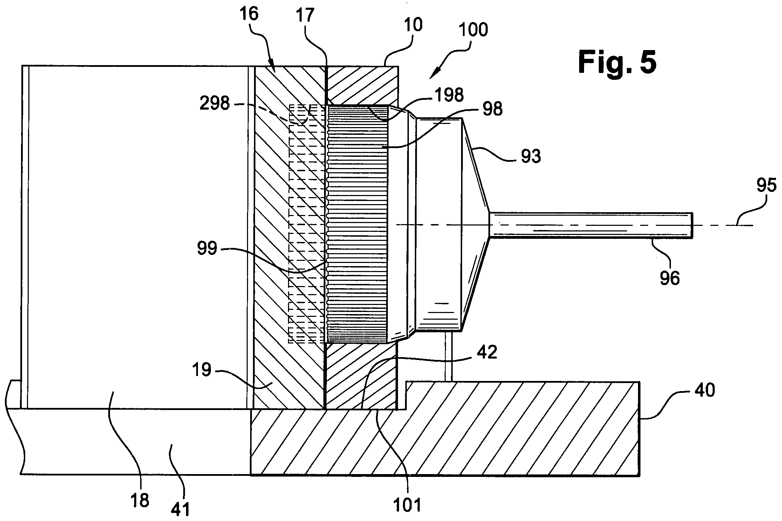

En variante l'ouverture 198 peut être prolongée par un trou borgne réalisé dans l'embase 19 du dissipateur 16 comme visible en pointillés en 298 à la figure 5.

La partie moletée de la diode s'étend alors dans ce trou borgne 298 et participe à la fixation du dissipateur 16.

En variante l'ouverture 198 est traversante mais le fond 99 est à distance du dissipateur 16.

Toutes les combinaisons sont possibles. Par exemple le culot 98 de la diode s'étend dans un mode de réalisation en saillie par rapport à la face inférieure 102 de la plaque 10 en sorte qu'un espace existe entre l'embase 19 du dissipateur 16 et la plaque 10, les fonds 99 des diodes solidaires de la plaque 10 servant à la fixation, par exemple par collage ou brasage, du dissipateur 16.

Grâce à l'espace on obtient un bon refroidissement.

Les diodes, solidaires de la plaque peuvent donc servir à la fixation du dissipateur.

Bien entendu le pad 17 peut être troué au niveau des fonds des diodes pour contact direct avec l'embase du dissipateur, l'assemblage de la plaque avec l'embase pouvant être réalisé par les moyens précités par exemple par sertissage, encliquetage, agrafage, collage, soudage ou brasage. Toutes les combinaisons sont possibles.

Bien entendu les queues 96, 97 des diodes 93, 94 peuvent être de longueur différente pour utiliser les diodes de l'art antérieur.

En variante les diodes ne comportent pas de queues.

D'une manière générale les diodes 93, 94 sont mieux refroidies du fait qu'elles sont associées à des ailettes 18 du dissipateur 16 transversalement longues et on réduit l'encombrement axial du fait de l'orientation des diodes.

Ces diodes peuvent être remplacées par des transistors du type MOSFET en sorte que les éléments redresseurs de courant ne sont pas forcément des diodes. Ces éléments comportent dans tous les cas un élément semi conducteur 200, représenté en pointillé à la figure 6, qui s'étend perpendiculairement aux ailettes 18 et parallèlement à la plaque 10.

Ainsi qu'il ressort de la description et des dessins les éléments redresseur de courant sont implantées à la périphérie externe du fond 56 du palier arrière 50, à l'extérieur des ouvertures 51 d'entrée d'air en sorte que ces ouvertures ou ouies du palier arrière sont dégagées et que la longueur radiale des ailettes 18 du dissipateur est transversalement la plus longue possible.

Bien entendu, grâce aux pattes 15, la plaque 10 peut être implantée plus bas vers le centre, les ailettes 18 étant alors raccourcies.

La périphérie externe du fond 56 peut comporter une partie inclinée.

Le ou les modules 100 sont bien refroidis en sorte que l'agencement de redressement, comportant les modules 100 et le palier 50, peut travailler à des températures plus élevées.

La puissance de la machine peut être augmentée du fait du meilleur refroidissement du ou des modules 100.

On obtient un très bon équilibre thermique de l'agencement de redressement comportant le palier 50 équipé de plusieurs modules 100, car on utilise des modules 100 standardisés.

L'invention permet de supprimer les connecteurs de phase.

Ainsi dans un mode de réalisation la sortie de la phase associée au module 100 concerné est reliée directement à la plaque en étant par exemple fixée par soudage sur la plaque.

De même la queue d'une diode négative peut être reliée par une liaison filaire au palier 50 qui est à la masse.

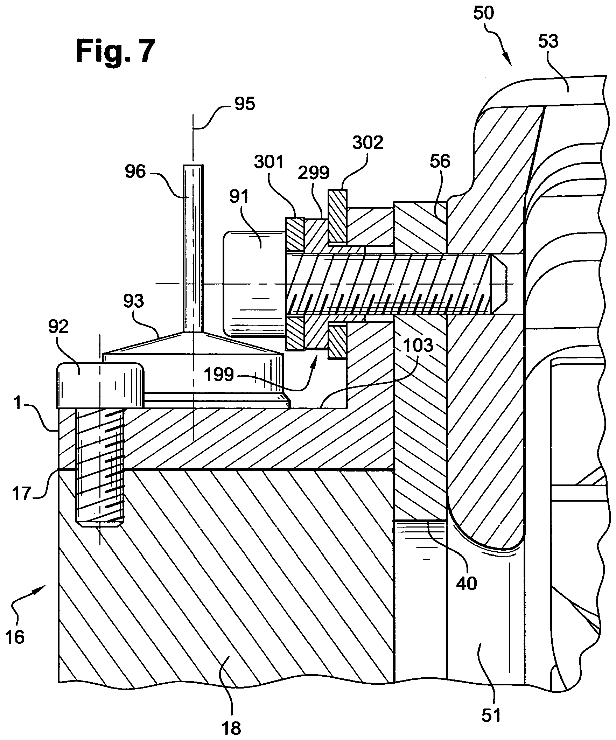

Dans un autre mode de réalisation (figure 7) on tire partie de la tête annulaire 299 du canon 199 pour monter de part et d'autre de cette tête une première rondelle métallique 301 en contact avec la tête de la vis 91 et une deuxième rondelle 302 en contact avec la patte 15 isolée électriquement du fond 56 du palier par la pièce 40.

Les rondelles 301, 302 sont isolées électriquement l'une de l'autre par la tête du canon 199.

La première rondelle 301 appartient dans un mode de réalisation à une première liaison électrique 310 de faible longueur (figure 8) reliée à la queue de la diode 97 de la diode négative 94. Cette rondelle 301 est à la masse via la vis 91. La deuxième rondelle 302, en contact avec la patte 15 de la plaque 10, appartient à une deuxième liaison électrique 110 (figure 8) reliée à la phase P1, P2, P3 concernée.

La patte 15 et l'organe de fixation 91 ont donc également une fonction de liaison électrique du module 100, respectivement avec la phase et la masse.

Comme représenté de manière schématique à la figure 8, la queue 96 de chaque diode positive 93 peut être reliée électriquement à la borne B+ via un élément 320 électriquement conducteur en arc de cercle.

Cet élément 320 est solidaire de la borne B+, non représentée par simplicité à la figure 2. Des languettes 321 ou autre liaison rigide, relient électriquement chaque queue 97 à l'élément 320 du type rigide.

Bien entendu les languettes 321 et l'élément 320 peut être noyés dans de la matière plastique pour être isolés électriquement en étant dénudés localement aux niveau des queues 97 et de la borne B+.

Bien entendu la présente invention n'est pas limitée aux exemples de réalisation décrits. Ainsi la machine peut être en variante sans balais en sorte que la présence du porte-balais n'est pas obligatoire ce qui peut permettre de monter un septième module. On peut même implanter ailleurs le régulateur de tension et donc monter des modules supplémentaires.

Le palier 50 peut être standardisé et recevoir un nombre de modules fonction des applications.

En variante les modules peuvent être portés par le fond du palier avant de la machine. On peut créer un module pour redresser le point neutre lorsque les sorties des phases sont connectées en étoile.

La plaque 10, de forme rectangulaire dans les figures, peut avoir une autre forme, de préférence une forme oblongue. Il en est de même de l'embase 19, qui avantageusement épouse la forme de la plaque 10.

La patte 15 peut être remplacée par des oreilles implantées aux extrémités de la plaque.

On peut prévoir de légères inclinaisons. Ainsi la plaque s'étend globalement perpendiculairement au fond 56 et les ailettes 18 s'étendent globalement perpendiculairement à la plaque 10.

Bien entendu, de manière précitée, les diodes ou autres éléments redresseur de courant peuvent servir à la fixation du dissipateur 16 ou participer à la fixation du dissipateur par exemple à l'aide des organes de fixation 92.

Les diodes peuvent s'étendre de part et d'autre de la plaque et servir à la fixation du dissipateur.

Le dissipateur est accolé à la plaque ou à légère distance de celle-ci.

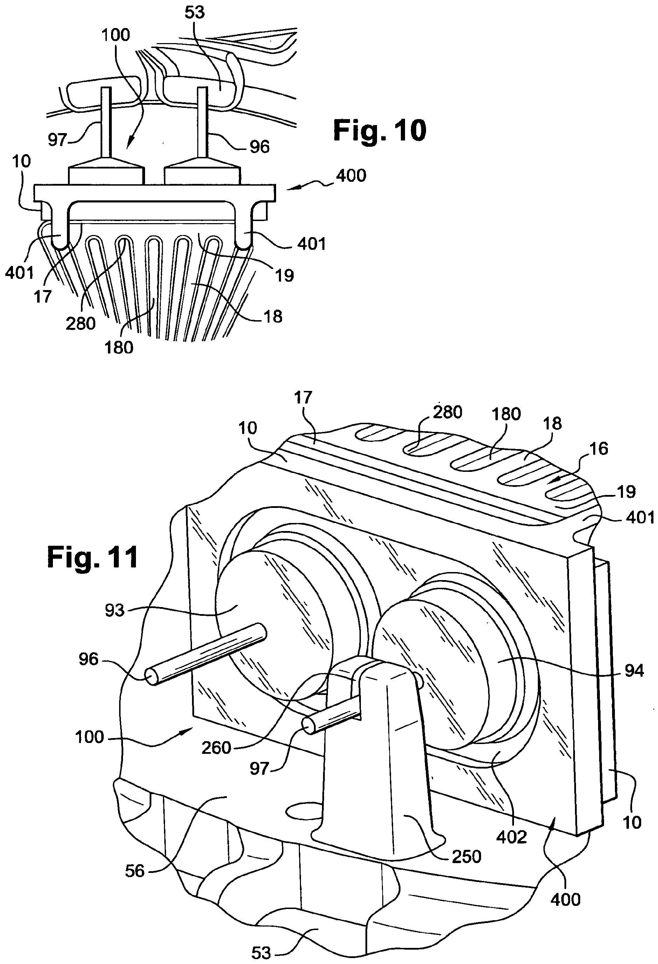

On peut inverser les structures, ainsi dans le mode de réalisation de la figure 10 le dissipateur 16 est solidarisé à la plaque 10 du module 100 par encliquetage à l'aide d'au moins une patte à crochets distincte du dissipateur 16.

Plus précisément dans le mode de réalisation de la figure 10, la plaque 10 du module 100 est solidarisée au dissipateur 16 par encliquetage à l'aide, d'une plaque électriquement isolante 400, qui prend appui sur la face externe de la plaque 10 du module et présente au moins une patte à crochet 401 déployable.

Le crochet de cette patte est destiné à venir en prise avec le bord externe 280 d'une fente 180 délimitée par deux ailettes consécutives 18 du dissipateur 16.

Comme visible à la figure 11, cette plaque électriquement isolante 400 présente un dégagement 402 pour les éléments 93, 94 redresseurs de courant du module 100. Ce dégagement est ici en forme de trou oblong.

Ici la plaque 400 présente deux pattes 401 à crochet s'étendant par-dessus le dissipateur 16 pour venir en prise par leur crochet avec le bord externe 280 d'une fente 180. Les pattes sont implantées au voisinage des bords latéraux de la plaque 400, qui recouvre ici la plaque 10 du module 100.

Ainsi qu'on l'aura compris la plaque 400 à crochets 401 permet un serrage de la plaque 10 du module au contact de l'élément 17, tel que de la colle thermoconductrice ou un pad thermoconducteur.

La première liaison électrique 310, en variante comprend, comme visible à la figure 11, une saillie 250 portée par le palier 50. Dans ce mode de réalisation le fond 56 du palier 50 porte des saillies d'orientation axiale 250 pour liaison électrique des queues 97 des diodes négatives 94 avec le palier 20.

Cette liaison est réalisée par soudage, sertissage, encliquetage ou agrafage des queues dans les saillies présentant à cet effet leurs extrémités libres une fente 260 de réception de la queue concernée

En variante la saillie 250 consiste en une cheminée venu de moulage avec le fond 56 et portant à solidarisation un organe en cuivre, par exemple en forme de clou enfoncé dans la cheminée, pour liaison par soudage ou tout autre moyen de l'extrémité de la queue 97 de la diode négative 94 avec la tête du clou.

En variante la saillie est rapportée sur le fond 56 du palier 50 par exemple par soudage, rivetage, vissage ou tout autre moyen. Cette saillie consiste par exemple en un organe en cuivre solidaire du fond 56, par exemple par rivetage ou soudage, et présentant une tête d'assemblage, par exemple par soudage, avec l'extrémité de la queue 97 de la diode négative 94.

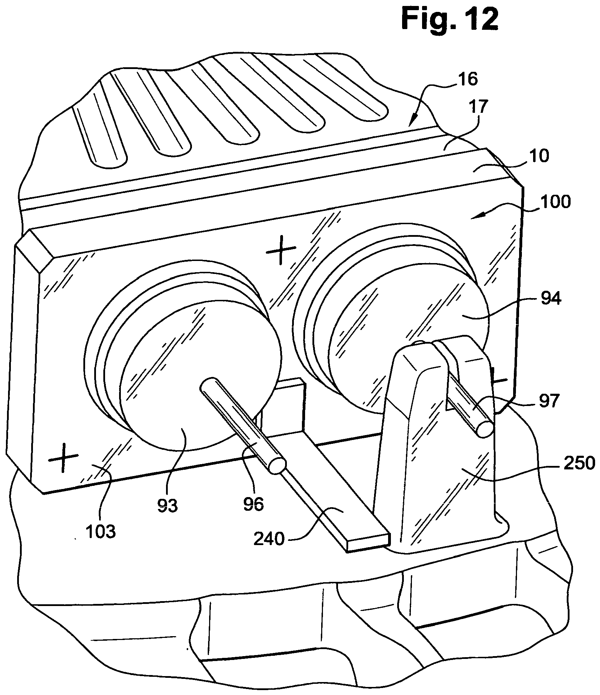

En variante comme visible à la figure 12, la deuxième liaison électrique avec la phase concernée comporte une languette 240 électriquement conductrice, ici en forme de L en variante en forme de T, fixée sur la face supérieure 103 plaque 10 du module 100 par exemple par soudage ou collage.

En variante, comme visible à la figure 9 on conserve la languette 302 électriquement conductrice et on supprime la languette électriquement conductrice 302 de la figure 7. Dans ce cas le trou de la patte 15 est taraudé pour vissage de la vis qui traverse une ouverture de l'élément électriquement isolant. Le fond 56 présente alors, en correspondance avec les trous de la patte 15 et de l'élément 40, un dégagement de plus grand diamètre, tel qu'un trou borgne 225 ou ici traversant pour éviter tout contact de la vis 91 avec le palier 50.

La liaison entre les queues 97 des diodes 94 et le palier peut être réalisée à l'aide de saillies du type de celles de la figure 12.

Toutes les combinaisons sont possibles.

Le ventilateur 57 peut être du type centripète en sorte que les ouvertures 51 sont dans ce cas des ouvertures de sortie et les ouvertures 53 des ouvertures d'entrée d'air.

Le ventilateur est dans un autre mode de réalisation un ventilateur simple.

Il peut être à action axiale et radiale.

Deux ventilateurs internes peuvent être prévus comme dans le document EP 0515 259 précité.

En variante un seul ventilateur interne est prévu.

Ainsi qu'il ressort de la description et des dessins la périphérie externe du fond 56 est ménagée car elle ne reçoit pas de diodes. Cette périphérie externe peut comporter une partie inclinée pour diriger l'air vers le bobinage du stator, plus précisément vers l'extrémité saillante appelée chignon de ce bobinage, à la faveur des ouvertures 53.

Bien entendu en variante le module 100 peut porter un autre composant électronique.

De même le moteur thermique est en variante un moteur thermique fixe.

Ce moteur peut être confiné dans un compartiment.

L'alternateur est en variante réversible. Ce type d'alternateur est appelé alterno-démarreur et permet notamment de démarrer le moteur thermique.

Dans ce cas on utilise des transistors du type MOSFET à la place des diodes 93,94.

Bien entendu dans les figures 10 à 12 on peut coller à isolation électrique l'ensemble dissipateur-module sur le fond du palier en sorte que la présence de la ou les protubérances 15 n'est pas obligatoire.

En variante on peut visser à isolation électrique cet ensemble sur le le palier concerné du carter de la machine à l'aide d'une ou plusieurs protubérances 15.

En variante la plaque 10, et donc le support 10, 16, comporte des protubérances.

Par exemple le plaque comporte deux protubérances en regard chacune d'un culot moleté d'une diode 93, 94 emmanché à force dans un trou borgne de la protubérance concernée de la plaque 10, en sorte que le fond du culot est en contact avec le fond du trou borgne et transmet de la chaleur de manière précitée.

Dans un mode de réalisation les protubérances de réception du culot des diodes s'étendent en saillie par rapport à la face supérieure de la plaque.

Dans un autre mode de réalisation les protubérances de réception du culot des diodes s'étendent en saillie part rapport à la face interne de la plaque en étant en contact avec l'élément 17. Un dégagement est donc présent entre les protubérances.

Dans ce cas l'élément 17 peut être en deux parties, chaque partie étant associée à une protubérance.

Le dégagement peut être en forme d'arc de cercle.

La partie 10 portant les éléments de redressement de courant n'est donc pas forcément en forme de plaque.

Bien entendu, en variante, le palier 50 de support de ou des modules a une forme plate et constitue un couvercle fermant l'autre partie du carter de la machine.

Le ou les ensembles dissipateur 16-modules100 au lieu de s'étendre en saillie vers l'extérieur par rapport au palier 50 avant ou arrière concerné, peut (vent) s'étendre en saillie vers l'intérieur par rapport au palier concerné.

Le ou les ensembles dissipateur-module peuvent donc s'étendre à l'intérieur de la machine.

Le capot de la machine est en variant constitué par le palier arrière.

Bien entendu on peut combiner les différents modes de fixation du dissipateur 16 avec sa plaque.

Ainsi au moins l'un des organes 92 de fixation peut être remplacé par une fixation à l'aide d'une diode ou d'un collage partiel. Les diodes peuvent servir à la fixation du dissipateur de manière précitée en association avec un collage ou une fixation par sertissage, ou à agrafes ou à encliquetage avec une seule patte à crochets.

Les organes de fixation peuvent consister en des rivets.

La fixation par collage peut être réalisée en plusieurs parties en combinaison par exemple avec une fixation à l'aide d'un organe de fixation.

De même un pad peut être associé avec un collage en plusieurs parties.

On appréciera que le support 10, 16 porte les éléments de redressement de courant 93, 94 d'une même phase ce qui permet de réduire l'encombrement du dispositif de redressement de courant et de diminuer le nombre de pièces, car il n'y a pas à prévoir un dissipateur de chaleur pour la diode positive et un autre pour la diode négative. Le dissipateur selon l'invention est commun au deux diodes. En outre on utilise les ouvertures 51 existantes sans avoir besoin de créer d'autres ouvertures néfastes pour la tenue mécanique du palier.

## Revendications

1. Agencement de redressement de courant pour machine électrique tournante polyphasée à ventilation interne, notamment un alternateur de véhicule automobile à ventilation interne, dotée de trois ou six phases présentant chacune une sortie, d'un axe de symétrie axiale (X-X), du type comprenant un dispositif de redressement de courant (100-93, 94) et un palier (50) appartenant à la machine électrique tournante et comprenant un fond (56) globalement d'orientation transversale par rapport à l'axe de symétrie axiale (X-X) de la machine, ledit fond (56) étant , d'une part, doté d'une ouverture centrale du palier (50) délimitée par la périphérie interne d'une âme (52) et d'ouvertures trapezoidales (51) de passage d'un fluide de refroidissement délimitées radialement vers l'intérieur par l'âme (52), et d'autre part, portant à isolation électrique le dispositif de redressement de courant comportant au moins un module (100) comprenant un support (10, 16) portant les éléments de redressement de courant (93, 94) de la phase concernée de la machine et destiné à être relié électriquement à la sortie de cette même phase de la machine, **caractérisée en ce qu'**une pièce électriquement isolante (40) est intercalée entre le support (10, 16) du module (100) et le fond du palier (50) de sorte que le support (10, 16) est en contact indirect avec le fond (56) via sa tranche, **en ce que** le support (10, 16) du module (100) comporte un dissipateur de chaleur (16) à ailettes (18) qui s'étend vers le centre de la machine et **en ce que** les ailettes (18) du dissipateur de chaleur (16) recouvrent au moins partiellement une ouverture (51) du palier (50).

2. Agencement selon la revendication 1, **caractérisé en ce que** les ailettes (18) du dissipateur de chaleur (16) recouvre totalement la dite ouverture.

3. Agencement selon la revendication 1 ou 2, **caractérisé en ce que** le dissipateur de chaleur (16) comporte une embase (19) et **en ce que** les ailettes sont solidaires de l'embase (19).

4. Agencement selon la revendication 3, **caractérisé en ce que** le dissipateur de chaleur (16) comporte une pluralité d'ailettes (18) fines s'étendant globalement perpendiculairement à son embase (19).

5. Agencement selon la revendication 4, **caractérisé en ce que** les ailettes (18) fines du dissipateur (16) ont des longueurs différents en sorte que le dissipateur (16) a globalement une forme trapézoïdale dont la grande base est constituée par son embase (19).

6. Agencement selon la revendication 3 ou 4, **caractérisé en ce que** le support ( 16) est monobloc et **en ce que** l'embase (19) du dissipateur (16) à ailettes (18) porte les éléments de redressement de courant (93, 94).

7. Agencement selon la revendication. 3, **caractérisé en ce que** le support (10, 16) comporte une partie (10) électriquement conductrice portant les éléments de redressement de courant (93, 94) et distincte du dissipateur de chaleur (18) et **en ce que** cette partie (10) portant les éléments de redressement de courant (93, 94) est solidarisée à l'embase (19) du dissipateur de chaleur (16).

8. Agencement selon la revendication 7, **caractérisé en ce que** la partie (10) portant les éléments de redressement de courant (93, 94) consiste en une plaque (10) électriquement conductrice.

9. Agencement selon la revendication 7, **caractérisé en ce qu'**un élément (17) conducteur de chaleur et électriquement isolant est intercalé entre la partie (10) portant les éléments de redressement de courant (93, 94) et l'embase (19) du dissipateur (16).

10. Agencement selon la revendication 9, **caractérisé en ce que** l'élément conducteur de chaleur (17) consiste en une feuille de matière plastique ou en une colle thermoconductrice.

11. Agencement selon la revendication 8, **caractérisé en ce qu'**un élément (17) conducteur de chaleur et électriquement isolant est intercalé entre la plaque (10) et l'embase (19) du dissipateur (16).

12. Agencement selon l'une quelconque des revendications précédentes, **caractérisée en ce que** la pièce (40) électriquement isolante est dotée d'une ouverture (51) de forme identique à celle de l'ouverture associée du module (100).

## Patentansprüche

1. Stromgleichrichteranordnung für mehrphasige drehende elektrische Maschine mit interner Belüftung, insbesondere einen Kraftfahrzeugdrehstromgenerator mit interner Belüftung, der mit drei oder sechs Phasen versehen ist, die jeweils einen Ausgang mit axialer Symmetrieachse (X-X) aufweisen, des Typs, der eine Stromgleichrichtervorrichtung (100-93, 94) und ein Lager (50) umfasst, das zu der drehenden elektrischen Maschine gehört und einen Boden (56) mit im Allgemeinen transversaler Orientierung in Bezug auf die axiale Symmetrieachse (X-X) der Maschine aufweist, wobei der Boden (56) einerseits mit einer Mittelöffnung des Lagers (50), die durch den Innenumfang eines Kerns (52) begrenzt ist, und mit trapezförmigen Öffnungen (51) für den Durchgang eines Kühlungsfluids, die radial einwärts durch den Kern (52) begrenzt sind, versehen ist und andererseits über eine elektrische Isolation die Stromgleichrichtervorrichtung trägt, die wenigstens ein Modul (100) umfasst, das einen Träger (10, 16) aufweist, der die Stromgleichrichterelemente (93, 94) der betreffenden Phase der Maschine trägt und dazu bestimmt ist, mit dem Ausgang derselben Phase der Maschine elektrisch verbunden zu werden, **dadurch gekennzeichnet, dass** ein elektrisch isolierendes Teil (40) zwischen den Träger (10, 16) des Moduls (100) und den Boden des Lagers (50) eingefügt ist, derart, dass der Träger (10, 16) über seine Seitenfläche in indirektem Kontakt mit dem Boden (56) ist, dass der Träger (10, 16) des Moduls (100) eine Wärmeabführungseinrichtung (16) mit Flügeln (18) umfasst, die sich zum Zentrum der Maschine erstreckt, und dass die Flügel (18) der Wärmeabführungseinrichtung (16) eine Öffnung (51) des Lagers (50) wenigstens teilweise abdecken.

2. Anordnung nach Anspruch 1, **dadurch gekennzeichnet, dass** die Flügel (18) der Wärmeabführungseinrichtung (16) die Öffnung vollständig abdecken.

3. Anordnung nach Anspruch 1 oder 2, **dadurch gekennzeichnet, dass** die Wärmeabführungseinrichtung (16) einen Sockel (19) umfasst und dass die Flügel mit dem Sockel (19) fest verbunden sind.

4. Anordnung nach Anspruch 3, **dadurch gekennzeichnet, dass** die Wärmeabführungseinrichtung (16) mehrere dünne Flügel (18) umfasst, die sich im Allgemeinen senkrecht zu ihrem Sockel (19) erstrecken.

5. Anordnung nach Anspruch 4, **dadurch gekennzeichnet, dass** die dünnen Flügel (18) der Abführungseinrichtung (16) unterschiedliche Längen besitzen, derart, dass die Abführungseinrichtung (16) im Allgemeinen die Form eines Trapezes hat, dessen große Basis durch ihren Sockel (19) gebildet ist.

6. Anordnung nach Anspruch 3 oder 4, **dadurch gekennzeichnet, dass** der Träger (16) einteilig ausgebildet ist und dass der Sockel (19) der Abführungseinrichtung (16) mit Flügeln (18) die Stromgleichrichterelemente (93, 94) trägt.

7. Anordnung nach Anspruch 3, **dadurch gekennzeichnet, dass** der Träger (10, 16) einen elektrisch leitenden Teil (10) umfasst, der die Stromgleichrichterelemente (93, 94) trägt und von der Wärmeabführungseinrichtung (18) verschieden ist, und dass dieser Teil (10), der die Stromgleichrichterelemente (93, 94) trägt, mit dem Sockel (19) der Wärmeabführungseinrichtung (16) fest verbunden ist.

8. Anordnung nach Anspruch 7, **dadurch gekennzeichnet, dass** der Teil (10), der die Stromgleichrichterelemente (93, 94) trägt, aus einer elektrisch leitenden Platte (10) besteht.

9. Anordnung nach Anspruch 7, **dadurch gekennzeichnet, dass** ein wärmeleitendes und elektrisch isolierendes Element (17) zwischen den Teil (10), der die Stromgleichrichterelemente (93, 94) trägt, und den Sockel (19) der Abführungseinrichtung (16) eingefügt ist.

10. Anordnung nach Anspruch 9, **dadurch gekennzeichnet, dass** das wärmeleitende Element (17) aus einer Kunststofffolie oder aus einem wärmeleitenden Klebstoff besteht.

11. Anordnung nach Anspruch 8, **dadurch gekennzeichnet, dass** ein wärmeleitendes und elektrisch isolierendes Element (17) zwischen die Platte (10) und den Sockel (19) der Abführungseinrichtung (16) eingefügt ist.

12. Anordnung nach einem der vorhergehenden Ansprüche, **dadurch gekennzeichnet, dass** das elektrisch isolierende Teil (40) mit einer Öffnung (51) versehen ist, deren Form mit jener der Öffnung, die dem Modul (100) zugeordnet ist, übereinstimmt.

## Claims

1. Current rectifying arrangement for an internally cooled polyphase rotating electrical machine, notably an internally cooled motor vehicle alternator, provided with three or six phases, each having an output, an axial axis of symmetry (X-X), of the type comprising a current rectifying device (100-93, 94) and a bearing (50) belonging to the rotating electrical machine and comprising a bottom (56) generally of transverse orientation relative to the axial axis of symmetry (X-X) of the machine, said bottom (56) being, on the one hand, provided with a central opening of the bearing (50) delimited by the inner periphery of a web (52) and trapezoidal openings (51) for the passage of a coolant delimited radially inward by the web (52), and, on the other hand, bearing, with electrical insulation, the current rectifying device comprising at least one module (100) comprising a support (10, 16) bearing the current rectifying elements (93, 94) of the relevant phase of the machine and intended to be linked electrically to the output of this same phase of the machine, **characterized in that** an electrically insulating part (40) is inserted between the support (10, 16) of the module (100) and the bottom of the bearing (50) such that the support (10, 16) is in indirect contact with the bottom (56) via its edge, **in that** the support (10, 16) of the module (100) comprises a heat sink (16) with fins (18) which extends towards the centre of the machine and **in that** the fins (18) of the heat sink (16) at least partially cover an opening (51) of the bearing (50).

2. Arrangement according to Claim 1, **characterized in that** the fins (18) of the heat sink (16) totally cover said opening.

3. Arrangement according to Claim 1 or 2, **characterized in that** the heat sink (16) comprises a base (19) and **in that** the fins are integral to the base (19).

4. Arrangement according to Claim 3, **characterized in that** the heat sink (16) comprises a plurality of thin fins (18) extending generally at right angles to its base (19).

5. Arrangement according to Claim 4, **characterized in that** the thin fins (18) of the heat sink (16) have different lengths such that the heat sink (16) generally has a trapezoidal form of which the large base is formed by its base (19).

6. Arrangement according to Claim 3 or 4, **characterized in that** the support (16) is of a single piece and **in that** the base (19) of the heat sink (16) with fins (18) bears current rectifying elements (93, 94).

7. Arrangement according to Claim 3, **characterized in that** the support (10, 16) comprises an electrically conductive part (10) bearing the current rectifying elements (93, 94) and distinct from the heat sink (18) and **in that** this part (10) bearing the current rectifying elements (93, 94) is integral to the base (19) of the heat sink (16).

8. Arrangement according to Claim 7, **characterized in that** the part (10) bearing the current rectifying elements (93, 94) consists of an electrically conductive plate (10).

9. Arrangement according to Claim 7, **characterized in that** a heat conducting and electrically insulating element (17) is inserted between the part (10) bearing the current rectifying elements (93, 94) and the base (19) of the heat sink (16).

10. Arrangement according to Claim 9, **characterized in that** the heat conducting element (17) consists of a sheet of plastic material or of heat conducting glue.

11. Arrangement according to Claim 8, **characterized in that** a heat conducting and electrically insulating element (17) is inserted between the plate (10) and the base (19) of the heat sink (16).

12. Arrangement according to any one of the preceding claims, **characterized in that** the electrically insulating part (40) is provided with an opening (51) of a form identical to that of the opening associated with the module (100).
